# NOUVEAU FASCICULE DE BREVET EUROPEEN

(11) **EP 0 141 707 B2**
(45) Date de publication et mention de la décision concernant l'opposition: **15.11.1995**
(45) Mention de la délivrance du brevet: 21.01.1987
(21) Numéro de dépôt: 84401963.8
(22) Date de dépôt: 02.10.1984
(51) Int. Cl.: F24H 1/40, F24H 1/44

(54) **Chaudière à condensation pour chauffage à fluide caloporteur**
Kessel mit Rauchgaskondensierung für die Heizung von Wärmeträgerflüssigkeit
Condensing boiler for heating a heat carrier fluid

(30) Priorité: 21.10.1983 FR 8316799
(43) Date de publication de la demande: 15.05.1985
(73) Titulaire: GEMINOX, Société Anonyme, F-29410 Saint Thegonnec (FR)
(72) Inventeur: LE MER, Joseph, F-29223 Saint-Thegonnec (FR)
(74) Mandataire: Chambon, Gérard

(56) Documents cités:
- EP-A- 0 027 055
- DE-A- 3 032 102
- FR-A- 2 320 505
- GB-A- 2 114 275
- US-A- 899 314

## Description

L'invention concerne une chaudière à condensation pour chauffage à fluide caloporteur et plus particulièrement une chaudière à gaz pour chauffage central à eau chaude.

Le rendement d'une chaudière à fluide caloporteur est fonction des performances du brûleur et de celles de l'échangeur qui doit transférer les calories, dégagées par la combustion, au fluide caloporteur.

Le fluide caloporteur est en général de l'eau qui est, après avoir été chauffée, dirigée vers les appareils de chauffage (radiateurs, tuyauteries noyées dans le sol...) pour retourner ensuite vers l'échangeur.

Dans ce type de chaudière lorsque les performances de l'échangeur sont élevées, il se produit des phénomènes de condensation, surtout si la température de l'eau de retour des appareils de chauffage est basse.

En conséquence, il est nécessaire de prévoir le collectage et l'évacuation des condensats ainsi formés.

Les chaudières classiques présentent généralement un brûleur disposé sous l'échangeur, ce qui est particulièrement gênant étant donné les risques de chutes des condensats sur la flamme. C'est pourquoi certaines autres chaudières présentent un brûleur disposé latéralement.

Il a aussi été imaginé de disposer le brûleur en haut de la chaudière en le retournant et d'aménager un collecteur des condensats juste en-dessous de l'échangeur, ce qui permet de récupérer lesdits condensats sans perturber la flamme de combustion, une telle chaudière est connue du GB-A-2 114 275.

On connaît aussi, notamment par le EP-A-0027055, un échangeur thermique pour chaudière, muni de tubes dans lesquels circule le fluide caloporteur et qui sont disposés en étages communicants de façon telle que chaque étage présente une longueur de circulation de fluide qui est décroissante d'un étage à l'autre du haut vers le bas.

L'invention concerne une chaudière à condensation qui offre notamment un excellent rendement grâce à une conception originale.

Une chaudière selon l'invention comporte un brûleur renversé dans la partie haute de la chaudière au-dessus d'un échangeur thermique muni d'au moins un tube dans lequel circule le fluide caloporteur, le ou les tubes de l'échangeur thermique étant disposés en étages communicants de façon telle que chaque étage présente une longueur de circulation de fluide qui est décroissante d'un étage à l'autre du haut vers le bas, tandis que sous ledit échangeur est aménagé un collecteur des condensats et des gaz de combustion, cette chaudière étant remarquable en ce que l'arrivée de fluide à chauffer est branchée sur l'étage le plus bas et la sortie de fluide chauffé sur l'étage le plus haut et en ce qu'elle est pourvue d'une chambre de combustion qui est disposée entre le brûleur et ledit échangeur et qui est latéralement entourée par une chemise de fluide munie, d'une part, d'une entrée raccordée avec la sortie de fluide aménagée dans la partie haute de l'échangeur et, d'autre part, d'une sortie de fluide.

Selon un mode de réalisation, la chemise de fluide est pourvue d'une cloison entre son entrée et sa sortie, afin d'assurer une circulation de fluide entre ladite entrée et ladite sortie.

Avantageusement dans le cas où chaque étage de l'échangeur comporte un ou plusieurs tubes ou tronçons de tube, dont le nombre varie d'un étage au suivant toujours de la même valeur d'au moins une unité, l'étage le plus bas comporte deux tubes ou tronçons de tube.

De préférence aussi, lorsque l'échangeur est formé par un ou plusieurs tubes, la communication d'un tube à l'autre pour chaque étage et la communication d'un étage à l'autre sont assurées par deux collecteurs munis de canaux qui sont raccordés de manière étanche avec les extrémités desdits tubes, l'un des collecteurs étant pourvu de l'arrivée de fluide de l'échangeur et l'autre collecteur ou le même de la sortie de fluide.

Avantageusement, un déflecteur entoure au moins partiellement l'échangeur, sa forme étant adaptée à celle de ce dernier, de manière à diriger les gaz de combustion vers ledit échangeur et les condensats vers le collecteur.

L'invention prévoit également selon un mode de réalisation préférentiel, que le brûleur présente une arrivée d'air qui communique avec une chambre de mélange dans laquelle le gaz combustible est injecté par une canalisation centrale d'alimentation tandis qu'une prise d'air secondaire entoure la chambre de mélange et qu'une chicane et une grille assurent la ccmmunication entre la chambre de mélange et la chambre de combustion.

Dans ce cas, et de préférence, l'arrivée d'air du brûleur est disposée tangentiellement à un pot circulaire au centre duquel est aménagée la chambre de mélange qui est pourvue d'une ouverture centrale par laquelle arrive l'air et passe la canalisation d'alimentation en gaz combustible.

L'invention sera bien comprise à la lecture de la description qui va suivre, d'un mode de réalisation donné à titre d'exemple, d'une chaudière à gaz, à eau chaude, et qui se réfère au dessin annexé dans lequel:
- la figure 1 montre schématiquement l'intérieur d'une chaudière selon l'invention,
- la figure 2 montre schématiquement une coupe selon un plan perpendiculaire à la figure 1 passant par un tube de chaque étage de l'échangeur,
- la figure 3 est une coupe schématique horizontale de l'échangeur, pratiquée au niveau de son étage le plus près du brûleur, la chaudière étant représentée tournée dans le sens de la figure 2,
- la figure 4 est une coupe schématique horizontale pratiquée entre l'échangeur et le brûleur, la chaudière étant représentée tournée dans le sens de la figure 2.

Il y a lieu de noter tout d'abord que les dessins, pour permettre de mieux comprendre l'invention, sont des schémas qui ne correspondent pas toujours à la réalité, comme il sera précisé ci-après.

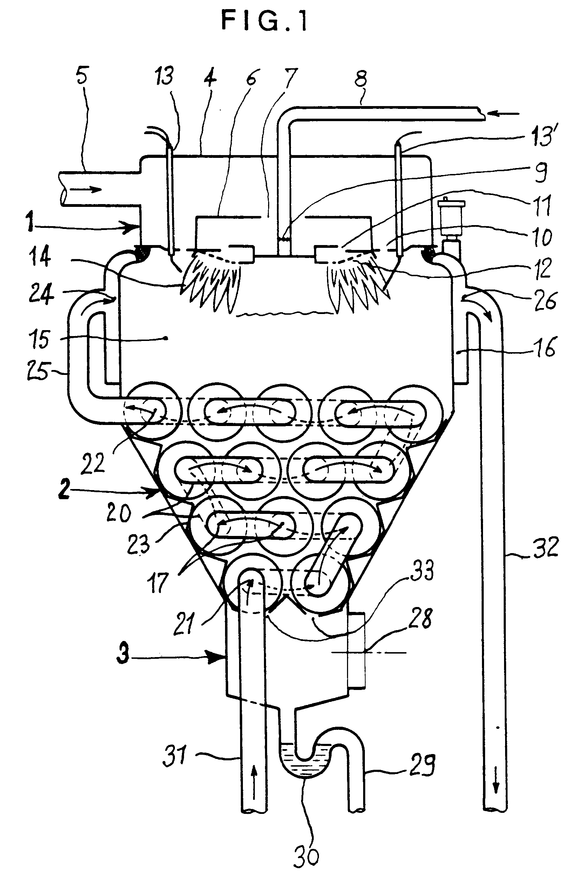

La figure 1 montre une chaudière munie de trois éléments principaux: un brûleur 1, un échangeur 2 et un collecteur 3 destiné à recueillir les condensats et les gaz de combustion.

Le brûleur 1, disposé dans la partie haute de la chaudière comporte un pot 4 dans lequel arrive tangentiellement de l'air par une arrivée 5.

Au centre du pot 4 est aménagée une chambre de mélange 6 pourvue d'une ouverture centrale 7 par laquelle passent, d'une part, l'air qui arrive en 5 et, d'autre part, une canalisation 8 d'alimentation en gaz combustible. La canalisation 8 est pourvue de trous 9 permettant l'injection du gaz dans la chambre 6.

Autour de la chambre 6 un ou des passages 10 sont prévus tandis qu'une chicane 11 et une grille 12 sont aménagées sous ladite chambre, des électrodes respectivement d'allumage 13 et de contrôle de flamme par ionisation 13′ étant en outre prévues au voisinage de la grille 12.

Le brûleur ainsi décrit fonctionne de la manière suivante. L'air comburant arrive en 5 tangentiellement dans le pot 4 avant de parvenir dans la chambre 6 où l'air se mélange avec le gaz combustible provenant des trous 9 de la canalisation 8.

Le mélange d'air et de gaz peut ainsi traverser la grille 12 après le passage de la chicane 11 et être enflammé au moyen de l'électrode 13, tandis que de l'air secondaire arrive par les passages 10.

Il est clair qu'ainsi le brûleur fournit une flamme annulaire 14 dirigée vers le bas.

La flamme 14 brûle dans une chambre de combustion 15, dite froide, limitée latéralement par une chemise d'eau 16 dont il sera question ci-après et par l'échangeur 2.

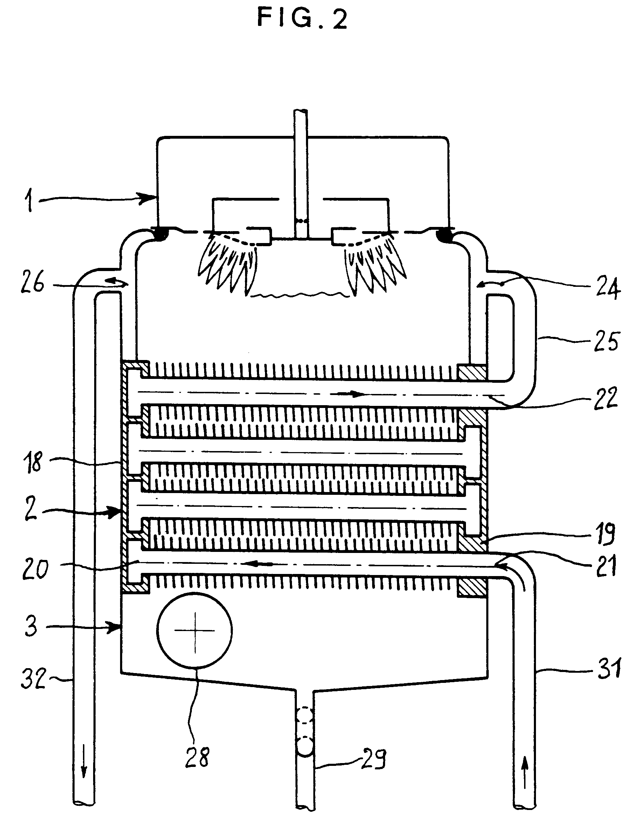

L'échangeur 2 est formé par plusieurs tubes 17 identiques et parallèles entre eux, qui sont pourvus d'ailettes (comme le montrent les figures 2 à 4) et qui sont disposés horizontalement en plusieurs étages.

L'étage le plus bas comporte ici deux tubes et chaque étage comporte à chaque fois un tube de plus que l'étage précédent, soit 2, 3, 4 et 5 tubes (en partant du bas vers le haut).

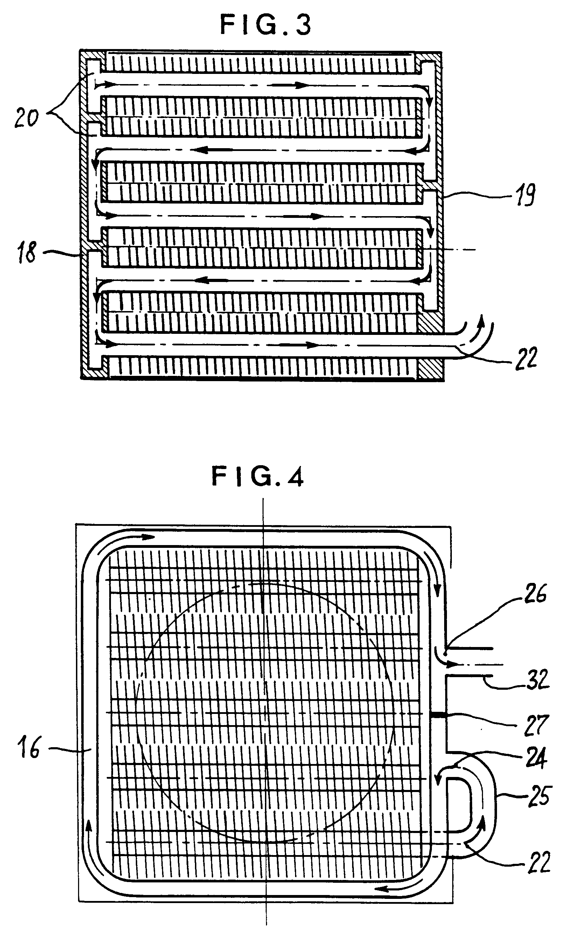

Les deux extrémités de chaque tube sont raccordées à deux collecteurs 18 et 19 (figures 2 et 3) formés de plaques épaisses qui sont munis, intérieurement de canaux tels que 20 raccordés de manière étanche auxdits tubes, d'une arrivée d'eau 21 (figures 1 et 2) et d'une sortie d'eau 22, lesdits canaux étant tels que l'eau qui arrive par 21 et ressort par 22 circule entre temps, comme le montre schématiquement la figure 1, en passant dans tous les tubes de chaque étage et en passant successivement d'un étage à l'autre, les canaux 20 des collecteurs étant aussi représentés, pour une meilleure compréhension, sur la figure 1, tandis que la circulation de l'eau est indiquée par des flèches (la circulation de l'eau dans le dernier étage étant plus particulièrement visible sur la figure 3).

Les tubes 17 présentent ici tous la même longueur de telle sorte que la forme générale de l'échangeur est celle d'un prisme droit trapézoïdal. Il est clair toutefois que l'étage le plus bas pourrait n'avoir qu'un tube ((prisme droit triangulaire), que la longueur et le nombre des tubes pourraient varier d'un étage à l'autre (forme tronc-pyramidale), ou que seule la longueur des tubes pourrait varier...

En outre, le nombre de tubes d'un étage à l'autre peut évidemment varier de plus d'une unité. Enfin, au lieu d'avoir des tubes raccordés aux collecteurs 18 et 19, il est envisageable naturellement d'utiliser un seul tube, chaque étage étant formé par un ou plusieurs tronçons de tube.

La figure 1 montre en outre, un déflecteur 23, formant un système de chicanes et qui est aménagé de manière à venir en partie au contact ou au voisinage des ailettes des tubes 17 extérieurs, à l'exception bien sûr du dessus des tubes du dernier étage et en ménageant au moins un passage 33 sous les tubes du premier étage.

La sortie d'eau 22 de l'échangeur, prévue dans l'un des collecteurs en regard de l'extrémité de l'un des deux tubes extérieurs du dernier étage est raccordée par une canalisation 25 à une arrivée 24 de la chemise d'eau 16, cette dernière étant pourvue d'une sortie 26.

Pour faciliter la compréhension des dessins, l'entrée 24 et la sortie 26 de la chemise d'eau 16 sont représentées sur les figures 1 et 2 de chaque côté, alors que la figure 4 montre qu'en réalité cette arrivée 24 et cette sortie 26 sont aménagées au voisinage l'une de l'autre, du même côté que l'arrivée 21 et la sortie 22 de l'échangeur, c'est-à-dire ici sur la même face avant de la figure 1.

La chemise d'eau 16 est pourvue d'une cloison 27 qui sépare l'entrée 24 et la sortie 26, de manière à permettre une circulation d'eau entre ladite entrée et ladite sortie.

Le collecteur 3 (figure 1) disposé sous l'échangeur 2, présente une sortie 28 pour les gaz de combustion et dans sa partie basse, un conduit 29 d'évacuation des condensats, muni d'un siphon 30.

Le fonctionnement de la chaudière décrite ci-avant est simple à comprendre. L'arrivée d'eau 21 est branchée sur une conduite 31 de retour chauffage, c'est-à-dire qu'elle communique avec l'eau sortant des appareils de chauffage (radiateurs par exemple).

L'eau circule dans l'échangeur comme décrit ci-avant pour ressortir en 22, entrer en 24 dans la chemise 16 et en ressortir en 26 pour déboucher dans une canalisation 32 de départ chauffage.

L'eau qui circule dans l'échangeur 2, est ainsi chauffée par les gaz chauds provenant de la chambre de combustion 15, cette dernière étant en outre refroidie par la chemise 16.

Les gaz de combustion sont avantageusement canalisés vers l'échangeur par le déflecteur 23 et aboutissent dans le collecteur 3 pour sortir par la sortie 28 tandis que les condensats tombent par gravité dans le collecteur 3 en étant éventuellement dirigés aussi par le déflecteur 23. Les condensats sont ensuite évacués par la canalisation 29.

Il est clair que la forme même de l'échangeur, comme le montre la figure 1, procure de bons échanges thermiques et une récupération facile des condensats.

En outre, si l'invention concerne plus spécialement une chaudière à gaz, il est bien sûr possible d'utiliser un brûleur au fuel, à vaporisation par exemple, la nature des matériaux choisis étant alors adaptée à ce type de brûleur.

Enfin, de très nombreux aménagements non décrits, sont évidemment prévus tels que: vise-flamme, détecteur de débit, circulateur de chauffage, ventilateur etc.

## Revendications

1. Chaudière à condensation pour chauffage à fluide caloporteur, comportant un brûleur (1) renversé dans la partie haute de la chaudière au-dessus d'un échangeur thermique (2) muni d'au moins un tube (17) dans lequel circule le fluide caloporteur, le ou les tubes (17) de l'échangeur thermique (2) étant disposés en étages communicants de façon telle que chaque étage présente une longueur de circulation de fluide qui est décroissante d'un étage à l'autre du haut vers le bas, tandis que sous ledit échangeur (2) est aménagé un collecteur (3) des condensats et des gaz de combustion, chaudière caractérisée en ce que l'arrivée (21) de fluide à chauffer est branchée sur l'étage le plus bas et la sortie (22) de fluide chauffé sur l'étage le plus haut et en ce qu'elle est pourvue d'une chambre de combustion (15) qui est disposée entre le brûleur et ledit échangeur et qui est latéralement entourée par une chemise de fluide (16) munie, d'une part, d'une entrée (24) raccordée avec la sortie (22) de fluide aménagée dans la partie haute de l'échangeur et, d'autre part, d'une sortie (26) de fluide.

2. Chaudière selon la revendication 1, caractérisée en ce que la chemise de fluide (16) est pourvue d'une cloison (27) entre son entrée et sa sortie, afin d'assurer une circulation de fluide entre ladite entrée et ladite sortie.

3. Chaudière selon l'une des revendications 1 et 2 dont chaque étage de l'échangeur comporte un ou plusieurs tubes (17) ou tronçons de tube, dont le nombre varie d'un étage au suivant toujours de la même valeur d'au moins une unité, caractérisée en ce que l'étage le plus bas comporte deux tubes ou tronçons de tube.

4. Chaudière selon l'une des revendications 1 à 3, dont chaque étage de l'échangeur est formé par un ou plusieurs tubes (17), caractérisée en ce que la communication d'un tube à l'autre pour chaque étage et la communication d'un étage à l'autre sont assurées par deux collecteurs (18,19) munis de canaux (20) qui sont raccordés de manière étanche avec les extrémités desdits tubes, l'un des collecteurs (19) étant pourvu de l'arrivée (21) de fluide de l'échangeur et l'autre collecteur ou le même de la sortie (22) de fluide.

5. Chaudière selon l'une des revendications 1 à 4, caractérisée en ce qu'un déflecteur (23) entoure au moins partiellement l'échangeur (2), sa forme étant adaptée à celle de ce dernier, de manière à diriger les gaz de combustion vers ledit échangeur et les condensats vers le collecteur (3).

6. Chaudière à gaz selon l'une des revendications 1 à 5, caractérisée en ce que le brûleur présente une arrivée d'air (5) qui communique avec une chambre de mélange (6) dans laquelle le gaz combustible est injecté par une canalisation centrale d'alimentation (8) tandis qu'une prise d'air secondaire (10) entoure la chambre de mélange et qu'une chicane (11) et une grille (12) assurent la communication entre la chambre de mélange (6) et une chambre de combustion (15).

7. Chaudière selon la revendication 6, caractérisée en ce que l'arrivée d'air (5) du brûleur est disposée tangentiellement à un pot circulaire (4) au centre duquel est aménagée la chambre de mélange (6) qui est pourvue d'une ouverture centrale (7) par laquelle arrive l'air et passe la canalisation d'alimentation (8) en gaz combustible.

## Patentansprüche

1. Kondensations-Kessel für eine Wärmeträger-Fluid-Heizung mit einem Brenner (1), der nach unten gerichtet im oberen Teil des Kessels oberhalb eines Wärmeaustauschers (2) angeordnet ist, welcher mindestens ein Rohr (17) aufweist, in welchem das Wärmeträger-Fluid zirkuliert, wobei das Rohr oder die Rohre (17) des Wärmeaustauschers (2) in Etagen angeordnet sind, die derart miteinander in Verbindung stehen, daß jede Etage eine Zirkulationslänge für das Fluid besitzt, die von einer Etage zur anderen von oben nach unten abnimmt, während unterhalb des besagten Wärmeaustauschers (2) ein Sammelbehälter (3) für die Kondensate und die Verbrennungsgase angeordnet ist, dadurch gekennzeichnet, daß der Zufluß (21) des zu beheizenden Fluids in der tiefsten Etage und der Abfluß (22) des beheizten Fluids in der höchsten Etage angeschlossen ist und das er mit einer Verbrennungskammer (15) versehen ist, die zwischen dem Brenner und dem besagten Wärmetauscher angeordnet ist und die seitlich von einem Fluid-Mantel (16) umgeben ist, der einerseits einen mit dem im Oberteil des Wärmetauschers vorgesehenen Fluid-Abfluß (22) verbundenen Eingang (24) und andererseits einen Fluid-Ausgang (26) aufweist.

2. Kessel nach Anspruch 1, dadurch gekennzeichnet, daß der Fluid-Mantel (16) zwischen seinem Eingang und seinem Ausgang mit einer Trennwand (27) versehen ist, zur Sicherstellung einer Fluid-Zirkulation zwischen besagtem Eingang und besagtem Ausgang.

3. Kessel nach einem der Ansprüche 1 und 2, bei welchem jede Etage des Wärmeaustauschers ein oder mehrere Rohre (17) oder Rohrabschnitte aufweist, deren Anzahl sich von einer Etage zur folgenden Etage um immer den gleichen Wert von mindestens einer Einheit verändert, dadurch gekennzeichnet, daß die tiefste Etage zwei Rohre oder Rohrabschnitte aufweist.

4. Kessel nach einem der Ansprüche 1 bis 3, bei dem jede Etage des Wärmeaustauschers durch ein oder mehrere Rohre (17) gebildet ist, dadurch gekennzeichnet, daß in jeder Etage die Verbindung von einem Rohr zum anderen und die Verbindung einer Etage mit der anderen Etage durch zwei Kollektoren (18, 19) bewirkt werden, die mit Kanälen (20) versehen sind, welche in dichtender Verbindung mit den Enden der besagten Rohre stehen, wobei der eine der Kollektoren (19) am Fluid-Zufluß (21) des Wärmeaustauschers und der andere oder der gleiche Kollektor am Fluid-Abfluß (22) des Wärmeaustauschers vorgesehen ist.

5. Kessel nach einem der Ansprüche 1 bis 4, dadurch gekennzeichnet, daß der Wärmeaustauscher (2) mindestens teilweise von einer Ablenkvorrichtung (23) umgeben ist, deren Form an die Form des Wärmeaustauschers derart angepaßt ist, daß die Verbrennungsgase dem Wärmeaustauscher und die Kondensate dem Sammelbehälter (3) zugeleitet werden.

6. Kessel mit Gasbeheizung nach einem der Ansprüche 1 bis 5, dadurch gekennzeichnet, daß der Brenner eine Luftzuführung (5) aufweist, die mit einer Mischkammer (6) verbunden ist, in welche das brennbare Gas durch einen zentralen Zuführungskanal (8) einströmt, während die Mischkammer von einem sekundären Luftanschluß (10) umgeben ist und eine Umlenkplatte (11) sowie ein Gitter (12) die Verbindung zwischen der Mischkammer (6) und einer Verbrennungskammer (15) bewirken.

7. Kessel nach Anspruch 6, dadurch gekennzeichnet, daß die Luftzuführung (5) des Brenners tangential zu einem kreisförmigen Topf (4) angeordnet ist, in dessen Mitte die Mischkammer (6) angeordnet ist, die mit einer zentralen Öffnung (7) versehen ist, durch welche die Luft einströmt und der Zuführungskanal (8) für das brennbare Gas hindurchgeführt ist.

## Claims

1. Condensation boiler for heating with a heat-conveying fluid, comprising an inverted burner (1) in the upper part of the boiler above a heat exchanger (2) provided with at least one tube (17) in which the heat-conveying fluid circulates, the tube or tubes (17) of the heat exchanger (2) being disposed in communicating stages such that each stage has a fluid circulation length which decreases from one stage to another from the top towards the bottom, whereas under said exchanger (2) there is a collector (3) for the condensates and the combustion gases, said boiler being characterised in that the inlet (21) for fluid to be heated is connected to the lowest stage and the outlet (22) for heated fluid is connected to the highest stage and in that it is provided with a combustion chamber (15) which is disposed between the burner and said exchanger and which is laterally surrounded by a fluid jacket (16) equipped firstly with an inlet (24) connected with the fluid outlet (22) disposed in the upper part of the exchanger and secondly with a fluid outlet (26).

2. Boiler according to claim 1, characterised in that the fluid jacket (16) is provided with a bulkhead (27) between its inlet and its outlet in order to ensure circulation of fluid between said inlet and said outlet.

3. Boiler according to one of claims 1 and 2, in which each stage of the exchanger comprises one or more tubes (17) or sections of tube, the number of which varies from one stage to the next always by the same value of at least one unit, characterised in that the lowest stage comprises two tubes or sections of tube.

4. Boiler according to one of claims 1 to 3, in which each stage of the exchanger is formed by one or more tubes (17), characterised in that communication from one tube to another for each stage and communication from one stage to another are ensured by two collectors (18, 19) provided with channels (20) which are connected sealingly with the ends of said tubes, one of the collectors (19) being provided with the fluid inlet (21) of the exchanger and the other or the same collector being provided with the fluid outlet (22).

5. Boiler according to one of claims 1 to 4, characterised in that a deflector (23) at least partially surrounds the exchanger (2), its shape being adapted to that of the latter, so as to direct the combustion gases towards said exchanger and the condensates towards the collector (3).

6. Gas boiler according to one of claims 1 to 5, characterised in that the burner exhibits an air inlet (5) which communicates with a mixing chamber (6) into which the combustible gas is injected through a central feed pipe (8), whereas a secondary air intake (10) surrounds the mixing chamber and a baffle (11) and a grille (12) ensure communication between the mixing chamber (6) and a combustion chamber (15).

7. Boiler according to claim 6, characterised in that the air inlet (5) of the burner is disposed tangentially to a circular box (4) in the centre of which is disposed the mixing chamber (6) which is provided with a central opening (7) through which the air enters and the combustible gas feed pipe (8) passes.
